# FASCICULE DE BREVET EUROPEEN

(11) **EP 4 375 801 B1**
(45) Date de publication et mention de la délivrance du brevet: **04.11.2026**
(21) Numéro de dépôt: 23209849.1
(22) Date de dépôt: 14.11.2023
(51) Int. Cl.: G06F 1/3231, G06F 1/3287, G06F 1/3293

(54) **MODE DE VEILLE POUR MINIMISER LA CONSOMMATION ET LE TEMPS DE DEMARRAGE**
SCHLAFMODUS ZUR MINIMIERUNG DES VERBRAUCHS UND DER STARTZEIT
SLEEP MODE TO MINIMIZE POWER CONSUMPTION AND STARTUP TIME

(30) Priorité: 28.11.2022 FR 2212397
(43) Date de publication de la demande: 29.05.2024
(73) Titulaire: SAGEMCOM BROADBAND SAS, 92270 Bois-Colombes (FR)
(72) Inventeur: BERGER, Jérôme, 92270 Bois-Colombes (FR); BOUVIGNE, Gabriel, 92270 Bois-Colombes (FR)
(74) Mandataire: Cabinet Boettcher

(56) Documents cités:
- US-A1- 2010 007 801
- US-A1- 2012 226 981
- US-A1- 2012 327 458

## Description

L'invention concerne le domaine de la mise en veille d'équipements électriques tels que des boîtiers décodeurs, des enceintes connectées, etc.

### ARRIERE PLAN DE L'INVENTION

La gestion de la mise en veille des équipements électriques est un sujet qui est actuellement particulièrement critique, car cette gestion a un impact majeur sur notre consommation électrique globale.

Certains équipements électriques intègrent des composants qui ont un temps de démarrage relativement long. Ces composants sont par exemple les microprocesseurs devant exécuter un système d'exploitation (ou OS, pour *Operating System*) ainsi que des applications complexes, ou bien les interfaces de communication (Wi-Fi par exemple).

Les concepteurs d'équipements électriques sont confrontés au dilemme suivant.

Pour que la mise en veille permette de réduire la consommation électrique de manière importante, il convient que le maximum de composants, et en particulier les composants qui ont une consommation électrique élevée, soient éteints lorsque l'équipement est en veille. Or, si les composants ayant un temps de démarrage long sont éteints lorsque l'équipement est en veille, le temps de démarrage est élevé lorsque l'utilisateur demande à l'équipement de démarrer.

Deux choix se présentent donc au concepteur : éteindre les composants ayant un temps de démarrage long pendant la mise en veille, ce qui dégrade l'expérience de l'utilisateur, ou bien laisser ces composants au moins partiellement alimentés, ce qui limite la réduction de la consommation électrique. Le document US 2012/327458 A1 divulgue un équipement comprenant différents modes de veille.

### OBJET DE L'INVENTION

L'invention a pour objet de réduire la consommation électrique d'un équipement mis en veille, tout en diminuant le temps de démarrage de l'équipement lorsqu'un utilisateur souhaite l'utiliser.

### RESUME DE L'INVENTION

En vue de la réalisation de ce but, on propose un équipement selon la revendication 1.

Ainsi, dans le premier mode de veille, seuls les composants nécessaires à la première fonction de détection ont besoin d'être alimentés. Le premier mode de veille consomme donc très peu d'énergie, car la consommation électrique de cette première fonction de détection est faible.

Dans le deuxième mode de veille, seuls les composants nécessaires à la deuxième fonction de détection ont besoin d'être alimentés. Cette deuxième fonction de détection est plus précise. Ces deux modes de veille permettent de réaliser une détection à la fois précise et peu consommatrice car, la plupart du temps et en l'absence de l'utilisateur, seule la première fonction de détection est mise en œuvre. La deuxième fonction de détection est utilisée seulement pour confirmer la présence de l'utilisateur.

Dans le troisième mode de veille, le premier composant, lent à démarrer, est alimenté. Ainsi, depuis le troisième mode de veille, l'équipement électrique est capable de passer très rapidement dans le mode actif.

Les trois modes de veille de l'invention permettent donc de réduire de manière importante la consommation électrique moyenne en veille de l'équipement, tout en minimisant le temps de démarrage perçu par l'utilisateur.

On propose de plus un équipement tel que précédemment décrit, le au moins un premier capteur comprenant au moins un microphone, l'équipement comprenant un module de traitement audio relié au au moins un microphone et agencé pour mettre en œuvre la première fonction de détection en analysant un signal audio capturé par le au moins un microphone.

On propose de plus un équipement tel que précédemment décrit, dans lequel le module de traitement audio est agencé pour calculer une puissance moyenne du signal audio, et pour détecter la présence de l'utilisateur si la puissance moyenne est supérieure à un seuil prédéterminé.

On propose de plus un équipement tel que précédemment décrit, dans lequel, avant de calculer la puissance moyenne du signal audio, le module de traitement audio applique un filtre sur le signal audio ayant une bande-passante qui inclut une bande de fréquences correspondant à la voix humaine.

On propose de plus un équipement tel que précédemment décrit, dans lequel le module de traitement audio utilise un premier algorithme d'apprentissage automatique, préalablement entraîné, pour détecter dans le signal audio la présence d'un son correspondant à la présence de l'utilisateur.

On propose de plus un équipement tel que précédemment décrit, le au moins un deuxième capteur comprenant une caméra, l'équipement comprenant un module de traitement d'images relié à la caméra et agencé pour mettre en œuvre la deuxième fonction de détection en analysant des images capturées par la caméra.

On propose de plus un équipement tel que précédemment décrit, dans lequel le module de traitement d'images utilise un algorithme de *Viola et Jones* pour détecter un visage dans les images capturées par la caméra.

On propose de plus un équipement tel que précédemment décrit, dans lequel le module de traitement d'images utilise un deuxième algorithme d'apprentissage automatique, préalablement entraîné, pour détecter la présence de l'utilisateur dans les images capturées par la caméra.

On propose de plus un équipement tel que précédemment décrit, l'équipement étant agencé pour passer du premier mode de veille au deuxième mode de veille lorsque la présence de l'utilisateur est détectée par la première fonction de détection.

On propose de plus un équipement tel que précédemment décrit, l'équipement étant agencé pour :
- passer du deuxième mode de veille au troisième mode de veille lorsque la présence de l'utilisateur est détectée par la deuxième fonction de détection ;
- repasser du deuxième mode de veille au premier mode de veille si, après une première durée prédéfinie, la deuxième fonction de détection ne détecte pas la présence de l'utilisateur.

On propose de plus un équipement tel que précédemment décrit, l'équipement étant agencé pour, lorsqu'il se trouve dans le troisième mode de veille :
- mettre en œuvre la deuxième fonction de détection ;
- tant que la présence de l'utilisateur est détectée par la deuxième fonction de détection, rester dans le troisième mode de veille ;
- si la présence de l'utilisateur n'est plus détectée pendant une deuxième durée prédéfinie, repasser dans le premier mode de veille.

On propose de plus un équipement tel que précédemment décrit, l'équipement étant agencé pour, lorsqu'il se trouve dans le premier mode de veille ou le deuxième mode de veille ou le troisième mode de veille, passer dans l'état actif lorsque l'utilisateur réalise une action prédéfinie.

On propose de plus un équipement tel que précédemment décrit, l'équipement étant agencé pour, lorsqu'il se trouve dans l'état actif et qu'il ne détecte pas d'action de l'utilisateur pendant une troisième durée prédéfinie, repasser dans le troisième mode de veille.

On propose de plus un équipement tel que précédemment décrit, l'équipement étant agencé pour, avant de repasser dans le troisième mode de veille, émettre un message à destination de l'utilisateur l'invitant à effectuer une action pour annuler le passage dans le troisième mode de veille.

On propose de plus un équipement tel que précédemment décrit, l'équipement étant agencé pour, avant de repasser dans le troisième mode de veille, tenter de détecter la présence de l'utilisateur en utilisant la deuxième fonction de détection, et, si la présence de l'utilisateur n'est pas détectée pendant une quatrième durée prédéfinie, passer dans le premier mode de veille plutôt que dans le troisième mode de veille.

On propose de plus un équipement tel que précédemment décrit, l'équipement étant un boîtier décodeur.

On propose de plus un procédé de gestion, mis en œuvre dans l'équipement tel que précédemment décrit, et conçu pour gérer des transitions entre le premier mode de veille, le deuxième mode de veille, le troisième mode de veille et le mode actif.

On propose de plus un programme d'ordinateur comprenant des instructions qui conduisent l'équipement tel que précédemment décrit à exécuter les étapes du procédé de gestion tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente un boîtier décodeur dans lequel est mise en œuvre l'invention ;
[Fig. 2] la figure 2 représente des transitions entre les modes de veille.

### DESCRIPTION DETAILLEE DE L'INVENTION

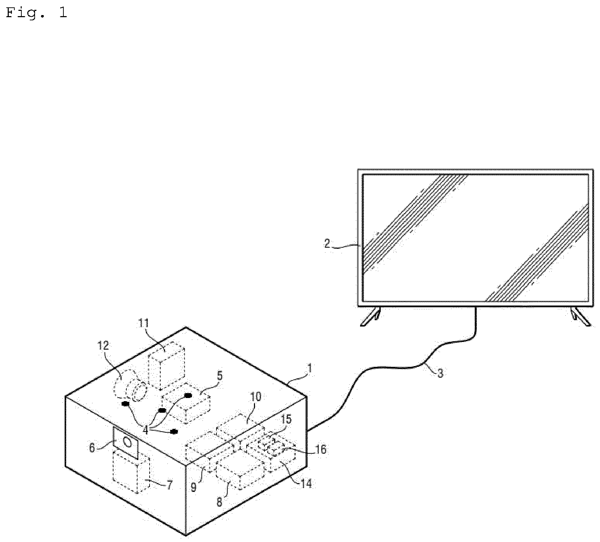

En référence à la figure 1, l'invention est ici mise en œuvre dans un boîtier décodeur 1 (ou STB, pour *Set-Top Box*), qui est par exemple relié à un téléviseur 2 via un câble HDMI 3 (pour *High-Definition Multimedia Interface*).

Le boîtier décodeur 1 comprend au moins un microphone 4, en l'occurrence une pluralité de microphones 4, et un module de traitement audio 5 relié aux microphones 4. Les microphones 4 et le module de traitement audio 5 ont une consommation électrique très faible, typiquement comprise entre 10 mW et 100 mW.

Le boîtier décodeur 1 comprend aussi une caméra 6 et un module de traitement d'images 7 relié à la caméra 6. La caméra 6 et le module de traitement d'images 7 ont une consommation électrique faible mais supérieure à celle des microphones 4 et du module de traitement audio 5, typiquement égale à 800 mW.

Le boîtier décodeur 1 comprend de plus un microprocesseur 8 agencé pour exécuter un OS et des applications complexes. Le microprocesseur 8 a une consommation électrique élevée, typiquement égale à 3 W.

Le boîtier décodeur 1 comprend aussi une interface réseau Wi-Fi 9. L'interface réseau Wi-Fi 9 a une consommation moyenne, typiquement égale à 1 W.

Les temps de démarrage du microprocesseur 8 et de l'interface réseau Wi-Fi 9 sont importants et sont typiquement supérieurs à 10s.

Le boîtier décodeur 1 comporte également un ou plusieurs modules dont le temps de démarrage est rapide, tel que par exemple un module de sortie HDMI 10, ainsi que des amplificateurs audio 11 et des haut-parleurs 12 permettant la restitution du son.

Le module de sortie HDMI 10 a une consommation électrique faible en soit, mais sa mise en marche peut provoquer le démarrage du téléviseur 2 auquel il est connecté via le câble HDMI 3, et qui a lui une consommation très élevée, typiquement supérieure ou égale à 50 W.

Les amplificateurs audio 11 ont une consommation électrique élevée, même lorsqu'ils jouent simplement du silence, qui est typiquement égale à 3,5 W.

Le boîtier décodeur 1 comporte aussi un module d'alimentation 14 capable d'alimenter les autres modules en énergie séparément ou conjointement

Le module d'alimentation 14 comporte un composant de traitement 15 (électronique et/ou logiciel), et par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Le module d'alimentation 14 comprend aussi une ou des mémoires 16 (et notamment une ou des mémoires non-volatiles), reliées à ou intégrées dans le composant de traitement 15. Au moins l'une de ces mémoires 16 forme un support d'enregistrement lisible par ordinateur, sur lequel est enregistré au moins un programme d'ordinateur comprenant des instructions qui conduisent le composant de traitement 15 à exécuter les étapes du procédé de gestion des transitions entre modes de veille, qui sera décrit plus bas.

Afin de réduire le plus possible la consommation d'énergie en veille tout en assurant un réveil rapide lorsque l'utilisateur le demande (par exemple en appuyant sur une touche de la télécommande), le boîtier décodeur 1 peut fonctionner selon différents modes de veille ou d'activité.

Le boîtier décodeur 1, qui comprend au moins un capteur, au moins un premier composant et au moins un deuxième composant plus rapide à démarrer que le au moins un premier composant, peut fonctionner selon au moins :
- un premier mode de veille (veille profonde), dans lequel au moins un premier capteur est alimenté, le au moins un premier composant et le au moins un deuxième composant n'étant pas alimentés, le boîtier décodeur 1 mettant en œuvre une première fonction de détection pour détecter une présence d'un utilisateur en utilisant le premier capteur ;
- un deuxième mode de veille (veille intermédiaire), dans lequel au moins un deuxième capteur identique ou non au au moins un premier capteur est alimenté, le au moins un premier composant et le au moins un deuxième composant n'étant pas alimentés, le boîtier décodeur 1 mettant en œuvre une deuxième fonction de détection pour détecter la présence de l'utilisateur, plus précise et plus consommatrice que la première fonction de détection, en utilisant le au moins un deuxième capteur ;
- un troisième mode de veille (veille légère), dans lequel le au moins un premier composant est alimenté et le au moins un deuxième composant n'est pas alimenté ;
- un mode actif, dans lequel le au moins un premier composant et le au moins un deuxième composant sont alimentés.

Ici, le au moins un premier composant comprend le microprocesseur 8, qui est lent à démarrer et dont la consommation est élevée. Le au moins un deuxième composant comprend les amplificateurs audio 11 et/ou le module de sortie HDMI 10, qui sont plus rapides à démarrer et dont la consommation est elle aussi élevée (ou bien dont le fonctionnement peut induire une consommation élevée, dans le cas du module de sortie HDMI 10).

Le au moins un premier capteur comprend les microphones 4. Le module de traitement audio 5 met en œuvre la première fonction de détection en analysant un signal audio capturé par les microphones 4. Le au moins un deuxième capteur comprend la caméra 6. Le module de traitement d'images 7 met en œuvre la deuxième fonction de détection en analysant des images capturées par la caméra 6.

Ainsi, dans le premier mode de veille (veille profonde), le boîtier décodeur 1 est capable de détecter une activité sonore grâce aux microphones 4 et, en particulier, de détecter la présence de l'utilisateur à proximité du boîtier décodeur 1 grâce aux sons que celui-ci produit.

Dans le deuxième mode de veille (veille intermédiaire), le boîtier décodeur 1 est capable de détecter visuellement une présence dans le champ de la caméra.

La deuxième fonction de détection est plus précise mais aussi plus consommatrice d'énergie. La caméra 6 est plus consommatrice, et le traitement d'images requiert une puissance de calcul relativement élevée.

Dans le troisième mode de veille (veille légère), le boîtier décodeur 1 est prêt à démarrer rapidement. En particulier, les modules et composants dont le temps de démarrage est long sont alimentés et peuvent donc démarrer dès que le boîtier décodeur 1 reçoit une commande de l'utilisateur.

Enfin, dans le mode actif, le boîtier décodeur 1 est en service.

Le tableau ci-dessous résume l'état d'alimentation des modules en fonction du mode de veille ou d'activité du décodeur :

| | **Premier mode de veille** | **Deuxième mode de veille** | **Troisième mode de veille** | **Mode actif** |
|---|---|---|---|---|
| **Microphones, module de traitement audio** | alimenté | s/o | s/o | s/o |
| **Caméra, module de traitement d'images** | éteint | alimenté | alimenté | alimenté |
| **Modules lents à démarrer : microprocesseur** | éteint | éteint | alimenté | alimenté |
| **Modules rapides à démarrer : amplificateurs audio, module de sortie HDMI** | éteint | éteint | éteint | alimenté |
| **Puissance consommée** | 10 à 100 mW | 800 mW | 4 W | > 8W |

On note que les microphones 4 et le module de traitement audio 5 doivent être alimentés lorsque le boîtier décodeur 1 est dans le premier mode de veille, et qu'ils peuvent être alimentés ou non dans les autres modes en fonction des besoins (ce qui explique le s/o, « sans objet », dans les cases concernées du tableau ci-dessus).

De même, la caméra 6 et le module de traitement d'images 7 peuvent être éteints lorsque le boîtier décodeur 1 est dans le mode actif, et allumés uniquement par intermittence pour vérifier si un utilisateur est présent avant de passer en veille.

Les modules rapides à démarrer ne sont pas forcément tous allumés tout le temps dans le mode actif. Le boîtier décodeur 1 pourrait être utilisé pour regarder un film (et donc le module de sortie HDMI 10 est allumé) avec le son sur une chaîne Hi-Fi (et donc les amplificateurs audio 11 et les haut-parleurs 12 sont éteints). Inversement, le boîtier décodeur 1 pourrait être utilisé comme enceinte audio (et donc les amplificateurs audio 11 et les haut-parleurs 12 sont allumés) sans affichage (et donc le module de sortie HDMI 10 est éteint).

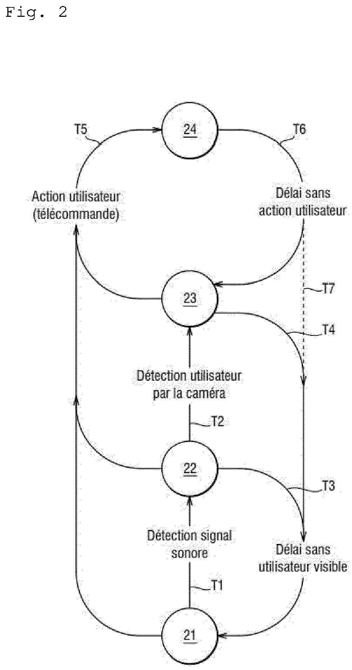

On s'intéresse maintenant, en référence à la figure 2, aux transitions entre les différents modes.

C'est le composant de traitement 15 du module d'alimentation 14 qui pilote ces différentes transitions.

On se place dans le cas où le boîtier décodeur 1 se trouve dans le premier mode de veille 21 (veille profonde). Le boîtier décodeur 1 passe du premier mode de veille 21 au deuxième mode de veille 22 (veille intermédiaire ; transition T1) lorsque la présence de l'utilisateur est détectée par la première fonction de détection.

Ainsi, dans le premier mode de veille 21, le module de traitement audio 5 analyse le signal audio capturé par les microphones 4. Si un signal représentatif de la présence d'un utilisateur est détecté, alors le boîtier décodeur 1 passe dans le deuxième mode de veille 22.

Lorsque le boîtier décodeur 1 se trouve dans le deuxième mode de veille 22, il passe du deuxième mode de veille 22 au troisième mode de veille 23 (veille légère) lorsque la présence de l'utilisateur est détectée (et donc confirmée) par la deuxième fonction de détection : transition T2.

Ainsi, dans le deuxième mode de veille 22, le module de traitement d'images 7 analyse régulièrement (par exemple toutes les secondes) l'image capturée par la caméra 6. Si un utilisateur est détecté sur l'image, alors le boîtier décodeur 1 passe dans le troisième mode de veille 23.

Par contre, le boîtier décodeur 1 repasse du deuxième mode de veille 22 au premier mode de veille 21 si, après une première durée prédéfinie, la deuxième fonction de détection ne détecte pas l'utilisateur : transition T3. La première durée prédéfinie est courte, par exemple comprise entre 30 s et 1 min.

Ainsi, si aucune personne n'a été détectée dans ce bref délai, alors le boîtier décodeur 1 retourne dans le premier mode de veille 21.

Lorsque le boîtier décodeur 1 se trouve dans le troisième mode de veille 23 (veille légère), le boîtier décodeur 1 met en œuvre la deuxième fonction de détection. Tant que la présence de l'utilisateur est détectée par la deuxième fonction de détection, le boîtier décodeur 1 reste dans le troisième mode de veille 23. Par contre, si la présence de l'utilisateur n'est plus détectée pendant une deuxième durée prédéfinie, le boîtier décodeur 1 repasse dans le premier mode de veille : transition T4.

Ainsi, dans le troisième mode de veille 23, le module de traitement d'images 7 analyse régulièrement (par exemple toutes les secondes) l'image capturée par la caméra 6. Tant qu'une personne est détectée sur l'image, le boîtier décodeur 1 reste dans le troisième mode de veille 23. Si aucune personne n'est détectée pendant la deuxième durée prédéfinie (par exemple égale à 15 min), alors le boîtier décodeur 1 retourne dans le premier mode de veille 21.

Lorsque le boîtier décodeur 1 se trouve dans le premier mode de veille 21 ou le deuxième mode de veille 22 ou le troisième mode de veille 23, le boîtier décodeur 1 passe dans le mode actif 24 lorsque l'utilisateur réalise une action prédéfinie : transition T5.

Ainsi, dans les trois modes de veille, si l'utilisateur effectue une action de réveil (par exemple un appui sur une touche de la télécommande ou sur un bouton du décodeur 1), alors le boîtier décodeur 1 passe directement dans le mode actif 24.

Lorsque le boîtier décodeur 1 se trouve dans le mode actif 24 et qu'il ne détecte pas d'action de l'utilisateur pendant une troisième durée prédéfinie, le boîtier décodeur 1 repasse dans le troisième mode de veille 23 (veille légère) : transition T6.

Ainsi, dans le mode actif 24, le boîtier décodeur 1 écoute les actions de l'utilisateur (par exemple appui sur des boutons de la télécommande, commandes vocales, etc.). S'il n'y a pas d'action de l'utilisateur pendant la troisième durée prédéfinie (qui est un délai relativement long, par exemple égal à 2 h), alors le boîtier décodeur 1 repasse dans le troisième mode de veille 23.

Optionnellement, avant de passer dans le troisième mode de veille 23, le boîtier décodeur 1 émet un message à destination de l'utilisateur l'invitant à effectuer une action pour annuler le passage dans le troisième mode de veille 23. Le message est par exemple affiché sur l'écran du téléviseur 2.

Optionnellement, avant de passer dans le troisième mode de veille, le boîtier décodeur 1 tente de détecter la présence de l'utilisateur en utilisant la deuxième fonction de détection et, si la présence de l'utilisateur n'est pas détectée pendant une quatrième durée prédéfinie, le boîtier décodeur 1 repasse dans le premier mode de veille 21 plutôt que dans le troisième mode de veille 23 : transition T7.

Ainsi, dans le mode actif 24, le module de traitement d'images 7 analyse régulièrement (par exemple toutes les secondes) l'image capturée par la caméra 6. Avant de passer dans le troisième mode de veille 23 (veille légère), le boîtier décodeur 1 regarde si une personne a été détectée au cours de la quatrième durée prédéfinie (qui est un délai moyen, par exemple égal à 15 min) avant de prendre la décision de passer en veille. Si aucune personne n'a été détectée au cours de ce délai, alors le boîtier décodeur 1 passe directement dans le premier mode de veille 21 (veille profonde) au lieu de passer dans le troisième mode de veille 23.

On s'intéresse maintenant aux détections réalisées par le module de traitement audio 5 et par le module de traitement d'images 7.

Le module de traitement audio 5 analyse le signal audio capturé par les microphones 4 pour déterminer s'il contient des bruits représentatifs de la présence d'un utilisateur à proximité du boîtier décodeur 1.

Selon un mode particulier de réalisation, le module de traitement audio 5 calcule une puissance moyenne du signal audio, et détecte qu'il y a des bruits représentatifs de la présence d'un utilisateur si la puissance moyenne est supérieure à un seuil prédéterminé (par exemple égal à -50 dB_{FS}).

Optionnellement, avant de calculer la puissance moyenne du signal audio, le module de traitement audio 5 applique un filtre sur le signal audio afin de mettre en valeur les fréquences correspondant à la voix humaine. Le filtre a par exemple une bande-passante qui inclut une bande de fréquences correspondant à la voix humaine.

Par exemple, le module de traitement audio 5 applique un filtre passe-bande entre 50 Hz et 1kHz avant de calculer la puissance moyenne et de la comparer au seuil prédéterminé.

En variante, le module de traitement audio 5 peut utiliser d'autres méthodes de détection pour analyser le signal audio capturé par les microphones 4. Le module de traitement audio 5 utilise par exemple un premier algorithme d'apprentissage automatique, préalablement entraîné, pour détecter dans le signal audio la présence d'un son correspondant à la présence de l'utilisateur. Il peut s'agir, par exemple, d'un algorithme basé sur des réseaux de neurones convolutifs, ou sur des réseaux de neurones récurrents.

Cet algorithme peut être appliqué sur un signal de pleine bande de fréquence, ou sur un signal filtré par un filtre passe-bande, par exemple tel que le filtre précédemment mentionné.

Avantageusement, la fréquence d'échantillonnage du microphone pourra être réduite afin de réduire la consommation nécessaire à l'échantillonnage et réduire la quantité de données à traiter pour la détection, tout en s'assurant de conserver les fréquences correspondant à la voie humaine.

Par exemple, la fréquence d'échantillonnage pourra être réduite à 8kHz pour les besoins de la détection, alors qu'elle pourrait être de valeur plus importantes (comme 48kHz) pour d'autres usages.

Tout autre procédé capable de détecter la présence d'un son correspondant à une présence humaine peut être utilisé.

Le module de traitement d'images 7 analyse l'image captée par la caméra 6 pour déterminer si un utilisateur est visible dans le champ de la caméra 6.

Selon un mode particulier de réalisation, le module de traitement d'images 7 utilise un algorithme de *Viola et Jones* pour détecter un visage dans les images capturées par la caméra 6.

Selon un autre mode de réalisation, le module de traitement d'images 7 utilise un deuxième algorithme d'apprentissage automatique, préalablement entraîné, pour détecter la présence de l'utilisateur dans les images capturées par la caméra 6.

Le module de traitement d'images 7 utilise par exemple un réseau de neurones, tel que par exemple *BlazeFace* ou *MobileNet* pour détecter la présence d'un utilisateur dans l'image. Ces différents procédés permettent tous de détecter si un visage ou une personne est présente dans l'image (ainsi que sa position d'ailleurs).

Bien entendu, l'invention n'est pas limitée aux modes de réalisation décrits mais englobe toute variante entrant dans le champ de l'invention tel que défini par les revendications.

L'invention n'est pas nécessairement mise en œuvre dans un boîtier décodeur, mais pourrait être mise en œuvre dans tout équipement comprenant au moins un capteur permettant de détecter la présence d'un utilisateur à proximité de l'équipement.

Les capteurs utilisés pourraient être différents.

On a décrit ici, pour la première fonction de détection, d'utiliser des microphones et un module de traitement audio. En effet, ces composants présentent une très faible consommation. D'autres types de capteurs à faible consommation pourraient être utilisés, comme par exemple un capteur de proximité de type PIR (pour *Passive InfraRed*). Le principe serait identique, car la faible fiabilité de détection de ce type de capteur (faux positifs du fait de passages brefs d'un humain ou d'un animal, ou à cause de variations d'ensoleillement) nécessite une confirmation en seconde étape par une fonction de détection plus précise, utilisant par exemple une caméra.

La première fonction de détection et la deuxième fonction de détection pourraient utiliser un même capteur (ou plusieurs mêmes capteurs). On peut en effet prévoir que la deuxième fonction de détection soit plus précise en utilisant un nombre de captures plus important, ou bien des captures réalisées à une fréquence plus élevée, ou bien en réalisant des calculs et traitements plus complexes et plus performants.

## Revendications

1. Equipement (1) comprenant au moins un capteur (4, 6), au moins un premier composant (8),au moins un deuxième composant (11, 12) plus rapide à démarrer que le au moins un premier composant, et au moins un composant de traitement (15), l'équipement étant agencé pour fonctionner selon au moins :
- un premier mode de veille (21), dans lequel au moins un premier capteur (4) est alimenté, le au moins un premier composant et le au moins un deuxième composant n'étant pas alimentés, l'équipement mettant en œuvre une première fonction de détection pour détecter une présence d'un utilisateur en utilisant le premier capteur ;
- un deuxième mode de veille (22), dans lequel au moins un deuxième capteur (6), étant le même ou non que le au moins un premier capteur, est alimenté, le au moins un premier composant et le au moins un deuxième composant n'étant pas alimentés, l'équipement mettant en œuvre une deuxième fonction de détection pour détecter la présence de l'utilisateur, plus précise et plus consommatrice que la première fonction de détection, en utilisant le au moins un deuxième capteur ;
- un troisième mode de veille (23), dans lequel le au moins un premier composant (8) est alimenté et le au moins un deuxième composant n'est pas alimenté ;
- un mode actif (24), dans lequel le au moins un premier composant (8) et le au moins un deuxième composant (11, 12) sont alimentés ;
le composant de traitement (15) étant agencé pour piloter des transitions entre le premier mode de veille, le deuxième mode de veille, le troisième mode de veille et le mode actif.

2. Equipement selon la revendication 1, le au moins un premier capteur comprenant au moins un microphone (4), l'équipement comprenant un module de traitement audio (5) relié au au moins un microphone et agencé pour mettre en œuvre la première fonction de détection en analysant un signal audio capturé par le au moins un microphone.

3. Equipement selon la revendication 2, dans lequel le module de traitement audio (5) est agencé pour calculer une puissance moyenne du signal audio, et pour détecter la présence de l'utilisateur si la puissance moyenne est supérieure à un seuil prédéterminé.

4. Equipement selon la revendication 3, dans lequel, avant de calculer la puissance moyenne du signal audio, le module de traitement audio (5) applique un filtre sur le signal audio ayant une bande-passante qui inclut une bande de fréquences correspondant à la voix humaine.

5. Equipement selon l'une des revendications 2 ou 3, dans lequel le module de traitement audio (5) utilise un premier algorithme d'apprentissage automatique, préalablement entraîné, pour détecter dans le signal audio la présence d'un son correspondant à la présence de l'utilisateur.

6. Equipement selon l'une des revendications précédentes, le au moins un deuxième capteur comprenant une caméra (6), l'équipement comprenant un module de traitement d'images (7) relié à la caméra et agencé pour mettre en œuvre la deuxième fonction de détection en analysant des images capturées par la caméra.

7. Equipement selon la revendication 6, dans lequel le module de traitement d'images utilise un algorithme de *Viola et Jones* pour détecter un visage dans les images capturées par la caméra.

8. Equipement selon la revendication 6, dans lequel le module de traitement d'images (7) utilise un deuxième algorithme d'apprentissage automatique, préalablement entraîné, pour détecter la présence de l'utilisateur dans les images capturées par la caméra.

9. Equipement selon l'une des revendications précédentes, l'équipement étant agencé pour passer du premier mode de veille (21) au deuxième mode de veille (22) lorsque la présence de l'utilisateur est détectée par la première fonction de détection.

10. Equipement selon l'une des revendications précédentes, l'équipement étant agencé pour :
- passer du deuxième mode de veille (22) au troisième mode de veille (23) lorsque la présence de l'utilisateur est détectée par la deuxième fonction de détection ;
- repasser du deuxième mode de veille au premier mode de veille si, après une première durée prédéfinie, la deuxième fonction de détection ne détecte pas la présence de l'utilisateur.

11. Equipement selon l'une des revendications précédentes, l'équipement étant agencé pour, lorsqu'il se trouve dans le troisième mode de veille (23) :
- mettre en œuvre la deuxième fonction de détection ;
- tant que la présence de l'utilisateur est détectée par la deuxième fonction de détection, rester dans le troisième mode de veille ;
- si la présence de l'utilisateur n'est plus détectée pendant une deuxième durée prédéfinie, repasser dans le premier mode de veille (21).

12. Equipement selon l'une des revendications précédentes, l'équipement étant agencé pour, lorsqu'il se trouve dans le premier mode de veille (21) ou le deuxième mode de veille (22) ou le troisième mode de veille (23), passer dans l'état actif (24) lorsque l'utilisateur réalise une action prédéfinie.

13. Equipement selon l'une des revendications précédentes, l'équipement étant agencé pour, lorsqu'il se trouve dans l'état actif (24) et qu'il ne détecte pas d'action de l'utilisateur pendant une troisième durée prédéfinie, repasser dans le troisième mode de veille (23).

14. Equipement selon la revendication 13, l'équipement (1) étant agencé pour, avant de repasser dans le troisième mode de veille (23), émettre un message à destination de l'utilisateur l'invitant à effectuer une action pour annuler le passage dans le troisième mode de veille.

15. Equipement selon la revendication 13, l'équipement (1) étant agencé pour, avant de repasser dans le troisième mode de veille (23), tenter de détecter la présence de l'utilisateur en utilisant la deuxième fonction de détection, et, si la présence de l'utilisateur n'est pas détectée pendant une quatrième durée prédéfinie, passer dans le premier mode de veille (21) plutôt que dans le troisième mode de veille (23).

16. Equipement selon l'une des revendications précédentes, l'équipement étant un boîtier décodeur (1).

17. Procédé de gestion, mis en œuvre dans l'équipement (1) selon l'une des revendications précédentes, et conçu pour gérer des transitions (T1, T2, T3, T4, T5, T6, T7) entre le premier mode de veille, le deuxième mode de veille, le troisième mode de veille et le mode actif.

18. Programme d'ordinateur comprenant des instructions qui conduisent l'équipement (1) selon l'une des revendications 1 à 16 à exécuter les étapes du procédé de gestion selon la revendication 17.

19. Support d'enregistrement lisible par ordinateur, sur lequel est enregistré le programme d'ordinateur selon la revendication 18.

## Patentansprüche

1. Gerät (1), umfassend zumindest einen Sensor (4, 6), zumindest eine erste Komponente (8), zumindest eine zweite Komponente (11, 12), die schneller gestartet wird als die zumindest eine erste Komponente, und zumindest eine Verarbeitungskomponente (15), wobei das Gerät dafür ausgelegt ist, in zumindest einem der folgenden Modi betrieben zu werden:
- in einem ersten Standby-Modus (21), in welchem zumindest ein erster Sensor (4) mit Strom versorgt wird, wobei die zumindest eine erste Komponente und die zumindest eine zweite Komponente nicht mit Strom versorgt werden, wobei das Gerät eine erste Erkennungsfunktion ausführt, um unter Verwendung des ersten Sensors eine Anwesenheit eines Benutzers zu erkennen;
- in einem zweiten Standby-Modus (22), in welchem zumindest ein zweiter Sensor (6), der mit dem zumindest einen ersten Sensor identisch oder nicht identisch ist, mit Strom versorgt wird, wobei die zumindest eine erste Komponente und die zumindest eine zweite Komponente nicht mit Strom versorgt werden, wobei das Gerät eine zweite Erkennungsfunktion ausführt, die genauer und stromintensiver ist als die erste Erkennungsfunktion, um unter Verwendung des zumindest einen zweiten Sensors die Anwesenheit des Benutzers zu erkennen;
- in einem dritten Standby-Modus (23), in welchem die zumindest eine erste Komponente (8) mit Strom versorgt wird und die zumindest eine zweite Komponente nicht mit Strom versorgt wird;
- in einem Aktivmodus (24), in welchem die zumindest eine erste Komponente (8) und die zumindest eine zweite Komponente (11, 12) mit Strom versorgt werden;
wobei die Verarbeitungskomponente (15) dafür ausgelegt ist, Übergänge zwischen dem ersten Standby-Modus, dem zweiten Standby-Modus, dem dritten Standby-Modus und dem Aktivmodus anzusteuern.

2. Gerät nach Anspruch 1, wobei der zumindest eine Sensor zumindest ein Mikrofon (4) umfasst, wobei das Gerät ein mit dem zumindest einen Mikrofon verbundenes Audioverarbeitungsmodul (5) umfasst, das dafür ausgelegt ist, die erste Erkennungsfunktion auszuführen, indem es ein von dem zumindest einen Mikrofon erfasstes Audiosignal analysiert.

3. Gerät nach Anspruch 2, wobei das Audioverarbeitungsmodul (5) dafür ausgelegt ist, eine mittlere Audiosignalleistung zu ermitteln und die Anwesenheit des Benutzers zu erkennen, wenn die mittlere Signalleistung einen vorbestimmten Schwellenwert übersteigt.

4. Gerät nach Anspruch 3, wobei das Audioverarbeitungsmodul (5) vor der Ermittlung der mittleren Audiosignalleistung einen Filter auf das Audiosignal anwendet, dessen Bandbreite ein Frequenzband umfasst, welches der menschlichen Stimme entspricht.

5. Gerät nach einem der Ansprüche 2 oder 3, wobei das Audioverarbeitungsmodul (5) einen ersten zuvor trainierten maschinellen Lernalgorithmus verwendet, um in dem Audiosignal das Vorhandensein eines Lautes zu erkennen, der in Zusammenhang mit der Anwesenheit des Benutzers steht.

6. Gerät nach einem der vorhergehenden Ansprüche, wobei der zumindest eine zweite Sensor eine Kamera (6) umfasst, wobei das Gerät ein mit der Kamera verbundenes Bildverarbeitungsmodul (7) umfasst, das dafür ausgelegt ist, die zweite Erkennungsfunktion auszuführen, indem es von der Kamera erfasste Bilder analysiert.

7. Gerät nach Anspruch 6, wobei das Bildverarbeitungsmodul einen Viola-Jones-Algorithmus verwendet, um ein Gesicht in den von der Kamera erfassten Bildern zu erkennen.

8. Gerät nach Anspruch 6, wobei das Bildverarbeitungsmodul (7) einen zweiten zuvor trainierten maschinellen Lernalgorithmus verwendet, um in den von der Kamera erfassten Bildern die Anwesenheit des Benutzers zu erkennen.

9. Gerät nach einem der vorhergehenden Ansprüche, wobei das Gerät dafür ausgelegt ist, von dem ersten Standby-Modus (21) in den zweiten Standby-Modus (22) umzuschalten, wenn die Anwesenheit des Benutzers durch die erste Erkennungsfunktion erkannt wird.

10. Gerät nach einem der vorhergehenden Ansprüche, wobei das Gerät dafür ausgelegt ist:
- von dem zweiten Standby-Modus (22) in den dritten Standby-Modus (23) umzuschalten, wenn die Anwesenheit des Benutzers durch die zweite Erkennungsfunktion erkannt wird;
- von dem zweiten Standby-Modus in den ersten Standby-Modus zurückzuschalten, wenn nach Verstreichen einer vorgegebenen Zeitdauer die zweite Erkennungsfunktion die Anwesenheit des Benutzers nicht erkennt.

11. Gerät nach einem der vorhergehenden Ansprüche, wobei das Gerät, wenn es sich in dem dritten Standby-Modus (23) befindet, dafür ausgelegt ist:
- die zweite Erkennungsfunktion auszuführen;
- solange die Anwesenheit des Benutzers durch die zweite Erkennungsfunktion erkannt wird, in dem dritten Standby-Modus zu verbleiben;
- wenn die Anwesenheit des Benutzers während einer zweiten vorgegebenen Zeitdauer nicht mehr erkannt wird, in den ersten Standby-Modus (21) zurückzuschalten.

12. Gerät nach einem der vorhergehenden Ansprüche, wobei das Gerät dafür ausgelegt ist, wenn es sich in dem ersten Standby-Modus (21) oder in dem zweiten Standby-Modus (22) oder in dem dritten Standby-Modus (23) befindet, in den Aktivmodus (24) zu schalten, wenn der Benutzer eine vorgegebene Aktion durchführt.

13. Gerät nach einem der vorhergehenden Ansprüche, wobei das Gerät dafür ausgelegt ist, wenn es sich im Aktivmodus (24) befindet und es während einer dritten vorgegebenen Zeitdauer keine Aktion des Benutzers erkennt, in den dritten Standby-Modus (23) zurückzuschalten.

14. Gerät nach Anspruch 13, wobei das Gerät (1) dafür ausgelegt ist, bevor es in den dritten Standby-Modus (23) zurückschaltet, eine Nachricht an den Benutzer zu senden, damit dieser eine Aktion durchführen kann, um das Zurückschalten in den dritten Standby-Modus abzubrechen.

15. Gerät nach Anspruch 13, wobei das Gerät (1) dafür ausgelegt ist, bevor es in den dritten Standby-Modus (23) zurückschaltet, zunächst zu versuchen, unter Verwendung der zweiten Erkennungsfunktion die Anwesenheit des Benutzers zu erkennen, und, wenn die Anwesenheit des Benutzers während einer vierten vorgegebenen Zeitdauer nicht erkannt wird, in den ersten Standby-Modus (21) statt in den dritten Standby-Modus (23) zurückzuschalten.

16. Gerät nach einem der vorhergehenden Ansprüche, wobei es sich bei dem Gerät um eine Decoderbox (1) handelt.

17. Betriebsverfahren, welches in dem Gerät (1) nach einem der vorhergehenden Ansprüche ausgeführt wird und dafür ausgebildet ist, die Übergänge (T1, T2, T3, T4, T5, T6, T7) zwischen dem ersten Standby-Modus, dem zweiten Standby-Modus, dem dritten Standby-Modus und dem Aktivmodus zu verwalten.

18. Computerprogramm, das Befehle umfasst, welche das Gerät (1) nach einem der Ansprüche 1 bis 16 dazu veranlassen, die Schritte des Betriebsverfahren nach Anspruch 17 auszuführen.

19. Computerlesbares Speichermedium, auf welchem das Computerprogramm nach Anspruch 18 abgespeichert ist.

## Claims

1. Piece of equipment (1) comprising at least one sensor (4, 6), at least one first component (8), at least one second component (11, 12) which is quicker to start up than the at least one first component, and at least one processing component (15), the piece of equipment being arranged to operate according to at least:
one first standby mode (21), wherein at least one first sensor (4) is switched on, the at least one first component and the at least one second component not being switched on, the piece of equipment implementing a first detection function to detect a presence of a user by using the at least one first sensor;
one second standby mode (22), wherein at least one second sensor (6), being the same or not as the at least one first sensor, is switched on, the at least one first component and the at least one second component not being switched on, the piece of equipment implementing a second detection function to detect the presence of the user, more accurate and more consuming than the first detection function, by using the at least one second sensor;
one third standby mode (23), wherein the at least one first component (8) is switched on and the at least one second component is not switched on;
one active mode (24), wherein the at least one first component (8) and the at least one second component (11, 12) are switched on ;
the processing component (15) being arranged to control transitions between the first standby mode, the second standby mode, the third standby mode and the active mode.

2. Piece of equipment according to claim 1, the at least one first sensor comprising at least one microphone (4), the piece of equipment comprising an audio processing module (5) connected to the at least one microphone and arranged to implement the first detection function by analysing an audio signal captured by the at least one microphone.

3. Piece of equipment according to claim 2, wherein the audio processing module (5) is arranged to calculate an average power of the audio signal, and to detect the presence of the user if the average power is greater than a predetermined threshold.

4. Piece of equipment according to claim 3, wherein, before calculating the average power of the audio signal, the audio processing module (5) applies a filter to the audio signal having a bandwidth which includes a frequency band corresponding to the human voice.

5. Piece of equipment according to any one of claims 2 or 3, wherein the audio processing module (5) uses a first automatic learning algorithm, trained beforehand, to detect in the audio signal, the presence of a sound corresponding to the presence of the user.

6. Piece of equipment according to any one of the preceding claims, the at least one second sensor comprising a camera (6), the piece of equipment comprising an image processing module (7) connected to the camera and arranged to implement the second detection function by analysing images captured by the camera.

7. Piece of equipment according to claim 6, wherein the image processing module uses a *Viola-Jones* algorithm to detect a face in the images captured by the camera.

8. Piece of equipment according to claim 6, wherein the image processing module (7) uses a second automatic learning algorithm, trained beforehand, to detect the presence of the user in the images captured by the camera.

9. Piece of equipment according to any one of the preceding claims, the piece of equipment being arranged to pass from the first standby mode (21) to the second standby mode (22), when the presence of the user is detected by the first detection function.

10. Piece of equipment according to any one of the preceding claims, the piece of equipment being arranged to:
pass from the second standby mode (22) to the third standby mode (23), when the presence of the user is detected by the second detection function;
pass back from the second standby mode to the first standby mode if, after a first predefined duration, the second detection function does not detect the presence of the user.

11. Piece of equipment according to any one of the preceding claims, the piece of equipment being arranged to, when it is in the third standby mode (23):
implement the second detection function;
as the presence of the user is detected by the second detection function, remain in the first standby mode;
if the presence of the user is no longer detected for a second predefined duration, pass back into the first standby mode (21).

12. Piece of equipment according to any one of the preceding claims, the piece of equipment being arranged to, when it is in the first standby mode (21) or the second standby mode (22) or the third standby mode (23), pass into the active state (24) when the user performs a predefined action.

13. Piece of equipment according to any one of the preceding claims, the piece of equipment being arranged to, when it is in the active state (24), and when it does not detect action from the user for a third predefined duration, pass back into the third standby mode (23).

14. Piece of equipment according to claim 13, the piece of equipment (1) being arranged to, before passing back into the third standby mode (23), send a message to the user asking them to perform an action to cancel the passage into the third standby mode.

15. Piece of equipment according to claim 13, the piece of equipment (1) being arranged to, before passing back into the third standby mode (23), attempt to detect the presence of the user by using the second detection function, and, if the presence of the user is not detected for a fourth predefined duration, pass into the first standby mode (21), rather than into the third standby mode (23).

16. Piece of equipment according to one of the preceding claims, the piece of equipment being a set-top box (1).

17. Management method, implemented in the piece of equipment (1) according to one of the preceding claims, and designed to manage transitions (T1, T2, T3, T4, T5, T6, T7) between the first standby mode, the second standby mode, the third standby mode and the active mode.

18. Computer program comprising instructions which cause the piece of equipment (1) according to any one of claims 1 to 16 to execute the steps of the management method according to claim 17.

19. Recording medium which can be read by a computer, on which the computer program according to claim 18 is recorded.
